# EUROPÄISCHE PATENTSCHRIFT

(11) **EP 0 502 478 B1**
(45) Veröffentlichungstag und Bekanntmachung des Hinweises auf die Patenterteilung: **11.10.1995**
(21) Anmeldenummer: 92103612.5
(22) Anmeldetag: 03.03.1992
(51) Int. Cl.: B23K 11/24, H02M 7/5387

(54) **Verfahren zum Widerstandsschweissen mit insbesondere wechselndem nichtsinusförmigem Schweisstrom und Anordnung zur Durchführung des Verfahrens**
Procedure of resistance welding in particular with alternating non sinusoidal welding current and arrangement for the working of the procedure
Procédé pour le soudage électrique par résistance spécialement avec courant de soudage alternatif non sinusoidal et arrangement pour la mise en oeuvre du procédé

(30) Priorität: 06.03.1991 CH 676/91; 22.04.1991 DE 4113117; 22.11.1991 CH 3435/91; 22.11.1991 CH 3436/91
(43) Veröffentlichungstag der Anmeldung: 09.09.1992
(73) Patentinhaber: ELPATRONIC AG, CH-6303 Zug (CH)
(72) Erfinder: Schuermann, Hubert, CH-8964 Rudolfstetten (CH); Sutter, Werner, CH-5422 Oberehrendingen (CH); Weber, Markus, CH-8957 Spreitenbach (CH)

(56) Entgegenhaltungen:
- EP-A- 0 078 252
- EP-A- 0 260 963
- EP-A- 0 261 328
- CH-A- 668 842
- DE-A- 2 023 825
- DE-C- 3 005 083
- JP-A-10 233 074
- JP-A-10 293 985
- JP-A-58 025 886
- JP-A-61 199 585

## Beschreibung

Die Erfindung betrifft ein Verfahren zum Widerstandsschweissen mit in periodischen Halbwellen pulsierendem, insbesondere wechselndem Schweissstrom.

Ausserdem betrifft die Erfindung eine Anordnung zur Durchführung des Verfahrens gemäss Oberbegriff des Patentanspruchs 23.

Eine solche Anordnung ist aus der EP-A2-0 078 252 bekannt, auf die nachfolgend noch näher eingegangen wird. Ein Verfahren und eine Anordnung mit einem Zerhacker und Pulsdauermodulation sind ferner aus EP-A-0 260 963 bekannt, auf die nachfolgend noch näher eingegangen wird.

Bei einer bekannten Nahtschweissvorrichtung (EP-A1-0 261 328) zum Widerstandslängsnahtschweissen der überlappten Ränder von Zargen für Konservendosen und dgl. wird eine dreiphasige Netzwechselspannung in eine Gleichspannung umgewandelt, die geglättet und in eine Impulsspannung mit wechselnder Polarität umgeformt wird. Diese Impulsspannung wird an die Schweisselektroden der Nahtschweissvorrichtung angelegt. Die Frequenz der Impulsspannung wird so gewählt, dass der sich ergebende Schweissstrom kontinuierlich ist und sich deshalb die einzelnen Schweisslinsen oder Schweisspunkte, welche jeweils durch eine der rechteckförmigen Halbwellen der Impulsspannung erzeugt werden, einander überlappen. Da jede Schweissstromhalbwelle durch eine Halbwelle der Impulsspannung erzeugt wird, ist die Schweissstromform von der Impulsdauer der Impulsspannungshalbwellen abhängig. Wenn beim Regeln des Schweissstroms diese Impulsdauer während einer Halbwelle verändert wird. so führt das zu einer wesentlichen Veränderung der Schweissstromform, was als nachteilig anzusehen ist. Es wäre wesentlich vorteilhafter, wenn die Schweissstromform nicht systembedingt wäre, also nicht durch Maschinenparameter bestimmt würde, sondern zur Optimierung des Schweissergebnisses vorgewählt werden könnte. Weiter arbeitet bei der bekannten Nahtschweissvorrichtung der Schweissstromregler, der den Schweissstrom pro Schweisspunkt regelt, jeweils mit dem Messwert des vorhergehenden Schweisspunktes. Die Reaktionszeit des Reglers ist daher, auch bedingt durch ein durch diesen angesteuertes Stellglied, relativ gross (bei einer Schweissfrequenz von 500 Hz beträgt die Reaktionszeit 1 ms). Dadurch ist der Regler nicht in der Lage, schnelle Veränderungen der Schweissparameter zu korrigieren (z.B. bei verschmutzter Blechoberfläche). Um die Reglereigenschaften bei dieser bekannten Nahtschweissvorrichtung zu verbessern, müsste also die Reglerreaktionszeit verkürzt werden. Zu diesem Zweck könnte daran gedacht werden, die Schaltfrequenz um einen bestimmten Faktor zu erhöhen. Dadurch würde aber auch die Frequenz des Schweissstroms um diesen Faktor erhöht. Da infolge der stark induktiven Last der Nahtschweissvorrichtung die Impedanz etwa proportional zur Frequenz zunähme, reduzierte sich der Schweissstrom um einen Faktor, der gleich dem Kehrwert des Faktors wäre, mit dem die Schaltfrequnz erhöht worden wäre. Um das zu kompensieren, müssten die Spannung und die Leistung des Frequenzumformers und des Schweisstransformators der bekannten Nahtschweissvorrichtung um den gleichen Faktor erhöht werden, um den die Schaltfrequenz erhöht würde. Weiter wäre dadurch dann auch die Forderung, dass die Schweissfrequenz in einem bestimmten Verhältnis zur Schweissgeschwindigkeit stehen muss, nicht mehr erfüllt. Bei dieser bekannten Nahtschweissvorrichtung lassen sich aufgrund der langen Reglerreaktionszeit Schweissparameter wie beispielsweise der Uebergangswiderstand an der Schweissstelle (Oberflächenbeschaffenheit des Schweissgutes), Werkstoffeigenschaften des Schweissgutes, usw. nicht ausreichend schnell berücksichtigen, und ausserdem besteht keine Möglichkeit, die Schweissstromform unterschiedlichen Schweissbedingungen, z.B. den Bedürfnissen der verschiedenen zu verarbeitenden Werkstoffe, anzupassen.

Die eingangs bereits erwähnte EP-A2-0 260 963 schlägt vor, eine Stromquelle hoher Frequenz einzusetzen, um die Verwendung eines kleineren Schweisstransformators zu ermöglichen. Da das Probleme bei der notwendigen Phasensteuerung von Thyristoren mit sich bringt, wird mit einer Feedforward- oder Vorwärtsregelung des Schweissstroms gearbeitet, indem in einer Halbwelle bei der Phasensteuerung ein vorberechneter Wert eingesetzt wird, der zuvor auf der Grundlage des Messwertes für die vorhergehende Halbwelle berechnet worden ist. Auch die aus dieser Druckschrift bekannte Anordnung arbeitet nicht bei allen Betriebsbedingungen zufriedenstellend, da der Schweissstrom pro Schweisspunkt ebenfalls nur einmal ein- und ausgeschaltet wird. Da auch hier der Regler jeweils mit dem Messwert des vorhergehenden Schweisspunktes arbeitet, ist die Reaktionszeit des Reglers relativ lang. Wenn bei der Pulsdauermodulation die Pulsdauer verändert wird, ändert sich auch die Schweissstromform, weshalb diese nicht an einen speziellen Werkstoff oder an spezielle Betriebsbedingungen anpassbar ist.

Gemeinsam ist darüber hinaus beiden vorbekannten Anordnungen, dass als Istwert des Schweissstroms nur dessen quadratischer Mittelwert gemessen und somit auch nur der Mittelwert des Schweissstroms geregelt werden kann. Als Sollwert wird deshalb ein konstanter Mittelwert des Schweissstroms vorgegeben.

Aus der CH-A5-668 842 ist eine Einrichtung zur stufenlosen Steuerung der Amplitude eines sinusförmigen elektrischen Wechselstroms bekannt. In jeder Halbwelle des Wechselstroms sind über einem veränderbaren Teil derselben steuerbare Schaltelemente vom Sperrzustand in den Durchlasszustand versetzbar. Dadurch wird zwar eine Art elektronisch steuerbarer Stelltransformator geschaffen, der praktisch verzögerungsfrei steuerbar ist, jedoch auch hier bleibt die Einwirkungsmöglichkeit auf den Schweissstrom auf einen Schaltvorgang pro Halbwelle desselben beschränkt. Daher lassen sich auch hier keine schnelleren Regelzeiten erzielen.

Schliesslich beschreibt die DE-C2-30 05 083 ein Verfahren zur Herstellung von längsnahtgeschweissten, gerundeten Zargen, bei dem zum Erzielen einer kontinuierlichen, unterbrechnungsfreien Schweissnaht die Dauer einer Halbwelle des nahezu rechteckförmigen Schweissstroms der Förderzeit einer Zarge zwischen den Schweisselektrodenrollen angepasst wird und die während des Schweissvorganges benötigte Energie dadurch direkt geregelt werden kann, dass dem Schweissstrom ein höherfrequenter Stromanteil überlagerbar ist. Die Regelmöglichkeit durch Ueberlagerung eines höherfrequenten Stromanteils ist naturgemäss beschränkt, und zwar hinsichtlich sowohl des Regelbereiches als auch der Regelzeit.

Schliesslich ist es dem Fachmann geläufig, z.B. aus der Soudronic-Druckschrift "Elektrisches Widerstandsschweissen" MDI 00188 D, S. 9 und 10, die Schweissstromstärke mittels einer Phasenanschnittsteuerung zu verändern. Leider ändert sich dabei jeweils auch die Schweissstromform. Dasselbe gilt, wenn der Schweissstrom bei sich ändernden Lastbedingungen konstant gehalten wird, da in beiden Fällen der Phasenanschnittwinkel verändert werden muss. Darüber hinaus ergibt die Phasenanschnittsteuerung der Primärwechselspannung eines Schweisstransformators einen lückenden Schweissstrom, was ebenfalls nachteilig ist.

Aus der EP-A-0 078 252 ist es bekannt, beim Argon-arc bzw. beim WIG(TIG)-Schweissen den Schweisswechselstrom mit einem Schaltnetzgerät zu erzeugen und eine Pulsbreitenmodulation vorzunehmen. Dabei ist aber nur ein Sollwert für den Strom vorgesehen und es soll durch einen Analogregler oder eine Mikroprozessorsteuerung ein konstanter Schweissstrom erzeugt werden.

Aufgabe der Erfindung ist es, ein Verfahren und eine Anordnung zu schaffen, durch welche sich die Schweissstromform den Bedürfnissen der verschiedenen zu verarbeitenden Materialien auf einfache Weise anpassen lässt. Ferner soll das Verfahren und die Anordnung zur schnellen Regelung des Schweissstroms geeignet sein.

Diese Aufgabe ist erfindungsgemäss mit den Merkmalen des Anspruchs 1 gelöst.

Weiter ist diese Aufgabe ausgehend von einer Anordnung der eingangs genannten Art erfindungsgemäss durch die kennzeichnenden Merkmale des Anspruchs 23 gelöst.

Während also im oben dargelegten Stand der Technik die Primärwechselspannung bei der Pulsdauermodulation in jeder Kalbwelle nur einmal zerhackt wird, wird sie erfindungsgemäss n-mal zerhackt, wobei n > 1 ist. Dadurch kann eine kurze Regelzeit erreicht werden, denn es sind mehrere Soll-Istwertvergleiche des Schweissstroms in jeder Halbwelle durchführbar, und es kann entsprechend mehrmals auf das Tastverhältnis bei der Pulsdauermodulation eingewirkt werden. Da die Zerhackungsfrequenz somit ein Vielfaches der Frequenz des Schweissstroms ist, wird innerhalb jedes Schweisspunktes eine schnelle Regelung erreicht. Dass ermöglicht dem Regler, schnelle Veränderungen der Schweissparameter (z.B. bei verschmutzter Blechoberfläche) zu korrigieren. Die Form der Impulse, in die die Primärwechselspannung in jeder Halbwelle zerhackt wird, ist einem Rechteck angenähert. Das Tastverhältnis, d.h. das Impulsdauer/Impulspause-Verhältnis kann in weiten Grenzen verändert werden. Der Mittelwert der Primärwechselspannung lässt sich dadurch direkt beeinflussen, und die Stromform lässt sich beliebig vorgeben, also variabel gestalten, was im Stand der Technik unmöglich ist. Dort ist sie, wie oben dargelegt, systembedingt (z.B. bei der Phasenanschnittsteuerung) oder fest. Die Zerhackungsfrequenz, die im oben dargelegten Stand der Technik entweder fest ist (z.B. bei der Phasenanschnittsteuerung) oder höchstens gleich der Schweissfrequenz ist, ist bei dem Verfahren und die Anordnung nach der Erfindung ein Vielfaches der Schweissfrequenz.

Das Verfahren und die Anordnung bieten insbesondere mit den bevorzugten Ausführungsformen somit folgende Vorteile:
- Die Schweissfrequenz ist variabel, und die Zerhackungsfrequenz ist ein wählbares Vielfaches der Schweissfrequenz;
- die Stromform ist vorwählbar, also variabel, und wird durch die Einwirkung auf das Tastverhältnis bei dem Regeln des Schweissstroms nicht wesentlich verändert;
- wenn die vorgewählte Schweissstromform im Betrieb nicht eingehalten werden sollte, wird durch den Regelvorgang, d.h. durch die Einwirkung auf das Tastverhältnis die Stromform entsprechend korrigiert;
- die im Speicher abgelegte Schweissstromform kann je nach Bedarf gewählt werden, d.h. als Dreieck, Sinus, Trapez, Trapez mit abfallendem Impulsdach oder Trapez mit Höckern oder Vertiefungen (je nach der gewünschten Wärmeeinergiebilanz innerhalb eines Schweisspunktes, je besser sich nämlich innerhalb eines Schweisspunktes die Aufheizphase und die Abkühlphase unter bestimmten Bedingungen kontrollieren lassen, um so besser lässt sich der Schweissvorgang beherrschen, und zwar so gut, dass mit Hilfe der Erfindung nunmehr Materialien geschweisst werden können, die zuvor als nicht schweissbar galten, wie z.B. mit Chrom überzogene Teile);
- die Reaktionszeit des Reglers ist wesentlich kürzer als im Stand der Technik, weil innerhalb einer Halbwelle n-mal geschweisst und der Strom jeweils nachgeregelt wird.

Vorteilhafte Ausgestaltungen der Erfindung bilden den Gegenstand der Unteransprüche.

In der Ausgestaltung der Erfindung nach Anspruch 2 wird jede Schweissstromform in einer wählbaren Sollwerttabelle abgelegt. Beispielsweise wird also eine Sollwerttabelle für eine Sinusstromform gespeichert, eine für eine Dreieckstromform, eine für eine Trapezstromform, usw.

In der Ausgestaltung der Erfindung nach Anspruch 24 lässt sich das erfindungsgemässe Regelverfahren am einfachsten realisieren, da die als Schaltelemente verwendeten Transistoren besonders kurze Schaltzeiten haben.

In den Ausgestaltungen der Erfindung nach den Ansprüchen 25 und 26 ist für jede Schweissstromform und/oder -frequenz eine besondere Untertabelle bzw. Sollwerttabelle verfügbar. Für kleinere Schweissfrequenzen stehen somit mehr Sollwerte pro Halbwelle zur Verfügung als für höhere Schweissfrequenzen.

In der Ausgestaltung der Erfindung nach Anspruch 27 lassen sich die kurzen Reaktionszeiten des Reglers besonders gut ausnutzen, da die Stromsollwerte und die jeweiligen Aenderungen zwischen benachbarten Stromsollwerten bequem im voraus berechnet und in der Tabelle abgespeichert werden können. Als Aenderung zwischen benachbarten Stromsollwerten wird vorzugsweise die erste Ableitung der Schweissstromkurve gespeichert. Das bringt den Vorteil mit sich, dass vorausschauend geregelt werden kann, d.h. ein Ueberschwingen bei dem Regelvorgang von vornherein im wesentlichen vermieden werden kann, weil aufgrund der gespeicherten Aenderung im voraus bekannt ist, wo der nächste Stromsollwert gelegen ist.

In den Ausgestaltungen der Erfindung nach den Ansprüchen 28 und 29 lässt sich auf einfache Weise eine gewünschte Amplitude des Schweissstroms erzielen, indem die gespeicherten Tabellensollwerte mit einem entsprechenden Faktor multipliziert werden, der nach Bedarf eingebbar ist.

Die Erfindung betrifft das Widerstandsschweissen mit in periodischen Halbwellen pulsierendem, insbesondere wechselndem Schweissstrom. Bisher erfolgte solches Schweissen mit sinusförmigem Strom. Bei der Weissblechschweissung stellen sich zunehmend Probleme bei der Schweissung sehr dünner Bleche und/oder sehr gering verzinnter Bleche. Insbesondere beim Schweissen von Dosen (Weissblech-Emballagen) können solche Bleche zu produktionstechnisch schwer beherrschbaren Problemen führen. Dasselbe gilt für das Verschweissen von Schwarzblech sowie speziell beschichteten Blechen, insbesondere verchromten Blechen. Durch verschiedene Schweissstromamplituden und Schweissstromfrequenzen des sinusförmigen Schweissstroms hat man bisher versucht, diese Probeme zu überwinden, doch blieben die Resultate häufig unbefriedigend.

Es besteht deshalb die Aufgabe, das Schweissen dünner und/oder gering verzinnter Weissbleche und anderer Bleche zu ermöglichen. Es soll insbesondere eine Energie-Einbringung beim Schweissen innerhalb einer sehr eng tolerierten Bandbreite ermöglicht werden, um Spritzer (zu hohe Energie-Einbringung) oder ein Aufklaffen der Ueberlappung (zu geringe Energie-Einbringung) zu vermeiden.

Vorzugsweise wird dies bei dem eingangs genannten Verfahren dadurch erreicht, dass der Schweissstrom von der Sinusform abweicht.

Dadurch, dass die einzelnen Halbwellen des Schweissstroms beliebige Form haben können, wird die genau erforderliche Energieabgabe an die Schweissstelle für eine optimale Schweissung ermöglicht. Durch den Verlauf des Stromes kann das erforderliche Aufheizen und Abkühlen der Schweissstelle zur Schaffung des Benötigten elektrischen Widerstandes an der Schweissstelle sehr fein beherrschbar gemacht werden, was bis anhin unmöglich war.

Ausführungsbeispiele der Erfindung werden im folgenden unter Bezugnahme auf die Zeichnungen näher beschrieben. Es zeigt
Fig. 1 ein Schaltbild einer Widerstandsnahtschweissmaschine mit einer erfindungsgemässen Anordnung zu Regeln des Schweissstroms,
Fig. 2 eine ausführlichere Darstellung des in Fig. 1 oberhalb einer Linie II-II dargestellten Teils der Anordnung nach der Erfindung,
Fig. 3 eine ausführlichere Darstellung eines in Fig. 1 als Block dargestellten Reglers,
Fig. 4 ein erstes Beispiel eine pulsdauermodulierten Primärwechselspannung eines Schweisstransformators und eines sich ergebenden sinusförmigen Schweissstroms,
Fig. 5 ein zweites Beispiel einer pulsdauermodulierten Primärwechselspannung, die auf andere Weise als in Fig. 4 zerhackt wird,
Fig. 6 ein drittes Beispiel einer pulsdauermodulierten Primärwechselspannung mit einem sich ergebenden trapezförmigen Schweissstrom,
Fig. 7a - 7c verschiedene Ausgestaltungen eines vorwählbaren trapezförmigen Schweissstroms mit geneigtem Impulsdach,
Fig. 8a - 8c verschiedene Beispiele eines vorwählbaren trapezförmigen Schweissstroms, dessen Impulsdach einen bzw. mehrere Höcker aufweist,
Fig. 9a - 9c verschiedene Beispiele eines vorwählbaren trapezförmigen Schweissstrom, dessen Impulsdach einen bzw. mehrere Vertiefungen aufweist,
Fig. 10 ein Beispiel eines vorwählbaren dreieckförmigen Schweissstroms, und
Fig. 11 bis 37 bevorzugte Stromformen.

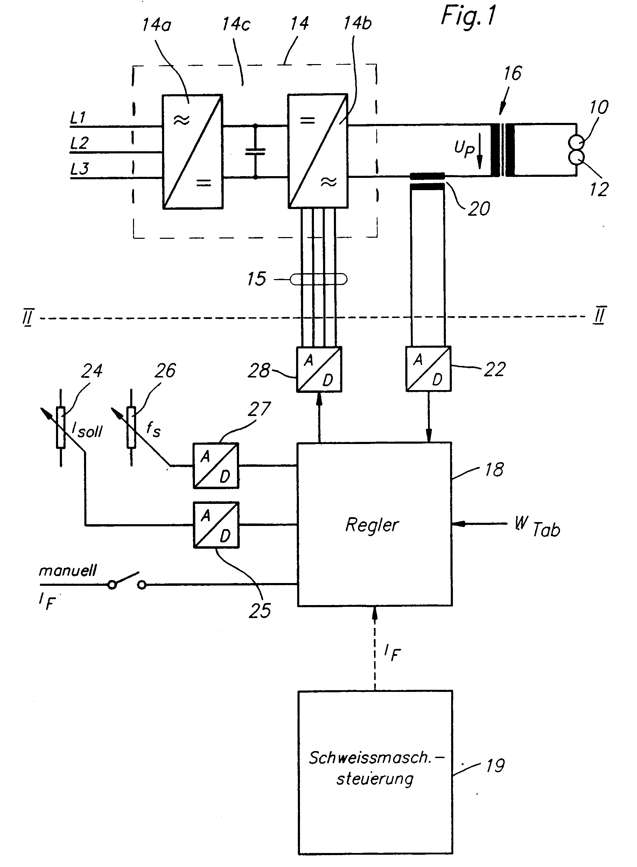

Fig. 1 zeigt ein vereinfachtes Schaltbild einer Widerstandsnahtschweissmaschine zu Längsnahtschweissen von nicht dargestellten gerundeten Dosenzargen zwischen rollenförmigen Schweisselektroden 10, 12. Die Widerstandsnahtschweissmaschine weist einen aus einem Netz, das durch Leitungen L1-L3 angedeutet ist, gespeisten statischen Frequenzumformer 14 mit einer Eingangsstufe 14a auf, die über einen üblichen Gleichstromzwischenkreis 14c mit einer als Zerhacker ausgebildeten Ausgangsstufe 14b verbunden ist. Die Ausgangsstufe 14b ist mit dem Primärkreis eines Schweissstromtransformators 16 verbunden, an den sie eine Primärwechselspannung Uₚ abgibt. Der Sekundärkreis des Schweisstransformators 16 ist mit den Schweisselektroden 10, 12 verbunden.

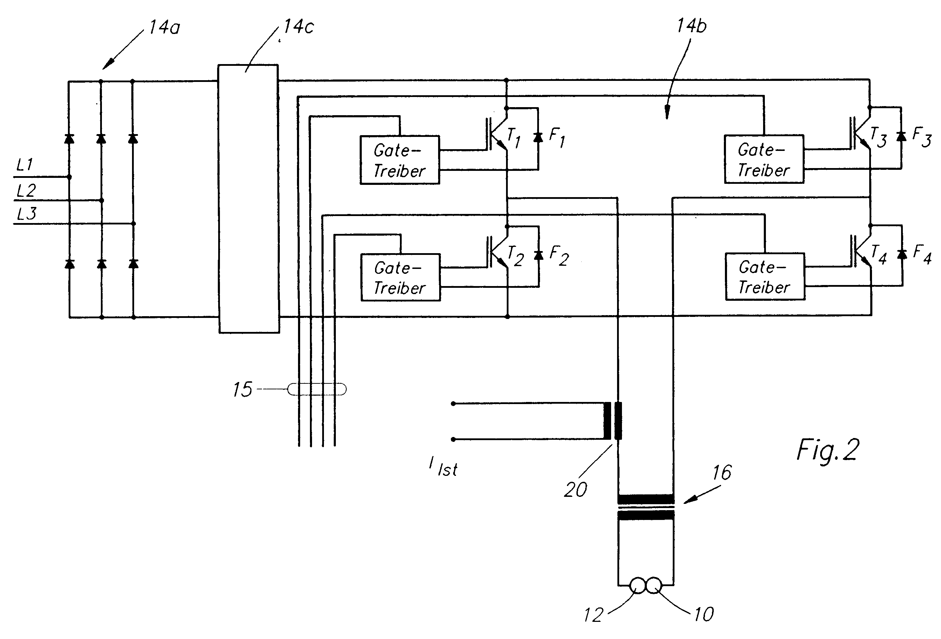

Gemäss der ausführlichen Darstellung in Figur 2 weist die Eingangsstufe 14a des statischen Frequenzumformers 14 einen dreiphasigen Gleichrichter auf, der zugleich den Eingang des Gleichstromzwischenkreises 14c bildet, was allgemein bekannt ist und hier nicht näher beschrieben zu werden braucht, da es für das Verhältnis der Erfindung unwesentlich ist. Der Zerhacker in der Aufgangsstufe 14b des Frequenzumformers 14 (Fig. 1) enthält eine Brückenanschaltung mit Transistoren T₁-T₄ als Schaltelementen und zu diesen parallelen Freilaufdioden F₂-F₄ gemäss der Darstellung in Figur 2. Vier Gate-Treiber sind auf in Figur 2 dargestellte Weise mit den Transistoren und Freilaufdioden verbunden und werden über Leitungen 15 durch einen Regler 18 (Fig. 1) gesteuert. In dem Primärkreis des Schweisstransformators 16 ist ein Stromwandler 20 angeordnet, der den Istwert des im Primärkreis des Schweisstransformators 16 fliessenden Strom erfasst.

Da die Erfindung aber das schnelle Regeln überhaupt erst ermöglicht, soll nachfolgend die Erläuterung anhand einer Regelung erfolgen.

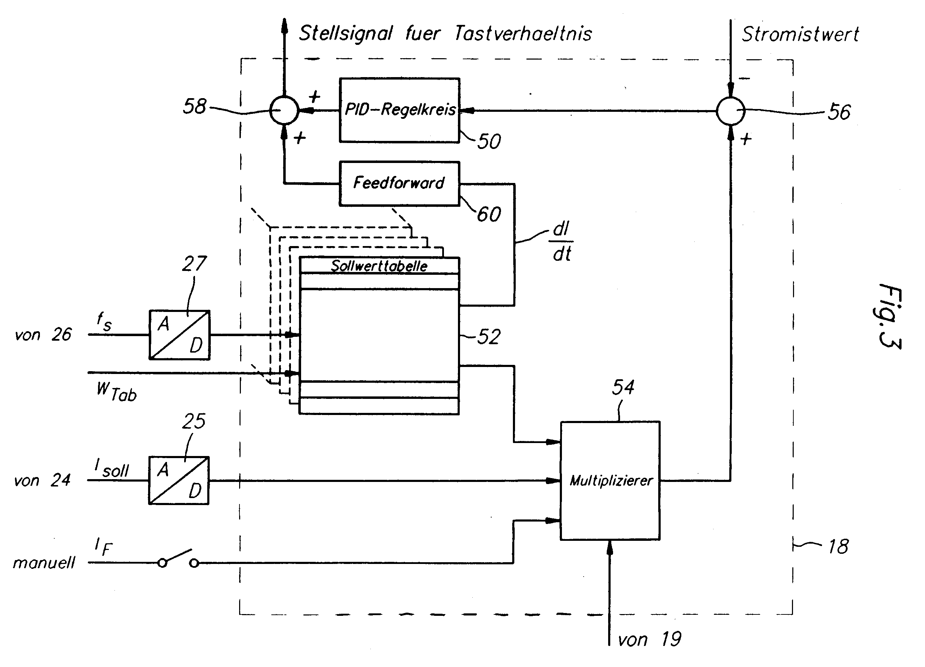

Gemäss der Darstellung in Figur 1 wird der Stromistwert aus dem Stromwandler 20 über einen A/D-Wandler 22 an einen Eingang des als Prozessrechner ausgebildeten Reglers 18 abgegeben. An dem Regler 18 sind über Potentiometer 24, 26 Sollwerte I_{Soll} für den Schweissstrom bzw. fₛ für die Schweissfrequenz einstellbar. Die an den Potentiometer 24, 26 eingestellten Analogspannungen werden über A/D-Wandler 25 bzw. 27 an den Prozessrechner angelegt. Zusätzlich kann über einen mit manuell bezeichneten Eingang oder über eine Schweissmaschinensteuerung 19 eine Schweissstromführungsgrösse I_{F} in den Regler 18 eingegeben werden. Diese wird mit dem Sollschweissstrom I_{Soll} verknüpft, um beispielsweise zu berücksichtigen, dass der Strom über einer Zarge nicht konstant ist. So kann die Schweissmaschinensteuerung 19, die weiss, wo sich die gerade geschweisste Dosenzarge in jedem Zeitpunkt befindet, den eingestellten Sollwert I_{Soll} noch entsprechend verändern, damit an jeder Stelle der Dosenzarge mit der passenden Schweissstromamplitude geschweisst wird. Der Regler 18 ermittelt durch einen Soll-Istwertvergleich des Schweissstroms einen Stellwert, den er über einen A/D-Wandler 28 und die Leitungen 15 an die Gate-Treiber (Fig. 2) in der Ausgangsstufe 14b des Frequenzformers 14 (Fig. 1) abgibt. Mit dem Stellwert wird das Tastverhältnis der Rechteckimpulse beeinflusst, in die der Zerhacker in der Ausgangsstufe 14b die geglättete Gleichspannung aus dem Gleichstromzwischenkreis 14c in jeder Halbwelle zerhackt, um so den Schweissstrom durch Pulsdauermodulation der Primärwechselspannung mit durch den Stellwert beeinflusstem Tastverhältnis zu regeln, was im folgenden unter Bezugnahme auf Fig. 3 noch näher beschrieben ist.

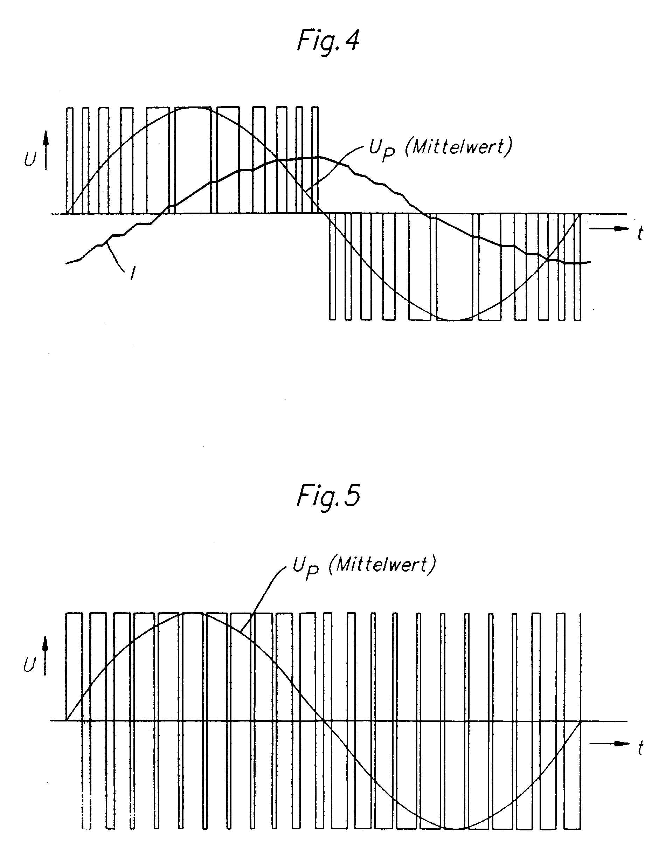

Verschiedene Arten der Erzeugung der Primärwechselspannung durch Zerhacken der geglätteten Gleichspannung in Rechteckimpulse sind in den Fig. 4 - 6 dargestellt. In dem Beispiel in Fig. 4 wird die geglättete Gleichspannung derart in Rechteckimpulse mit von Halbwelle zu Halbwelle wechselndem Vorzeichen zerhackt, dass sich im Mittel eine sinusförmige Primärwechselspannung Uₚ und damit im wesentlichen eine Sinusform des Schweissstroms I ergibt.

Entsprechendes gilt für das Beispiel nach Fig. 5, bei dem die geglättete Gleichspannung in Rechteckimpulse gleicher Höhe zerhackt wird, die jeweils gleich dem Zweifachen des Scheitelwerts der im Mittel sinusförmigen Primärwechselspannung Uₚ ist.

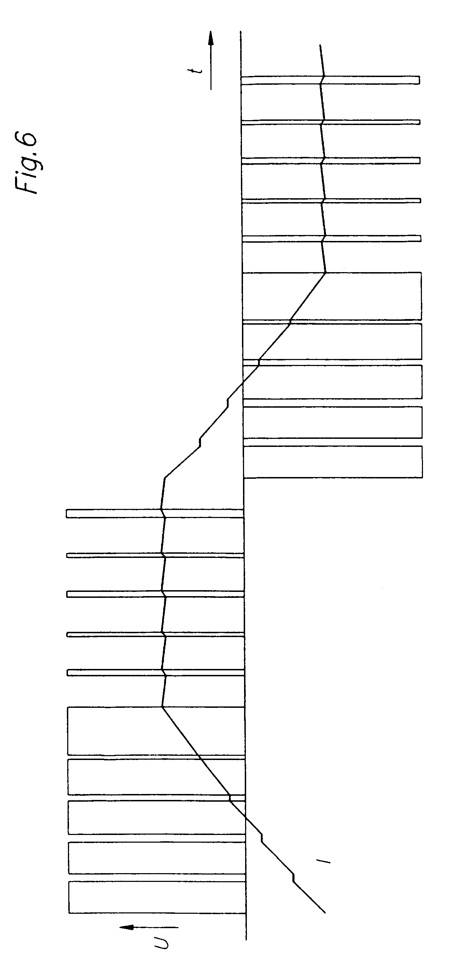

In dem Beispiel nach Fig. 6 erfolgt die Zerhackung der geglätteten Gleichspannung nach dem gleichen Prinzip wie in Fig. 4, jedoch so, dass sich ein trapezförmiger Schweissstrom I ergibt.

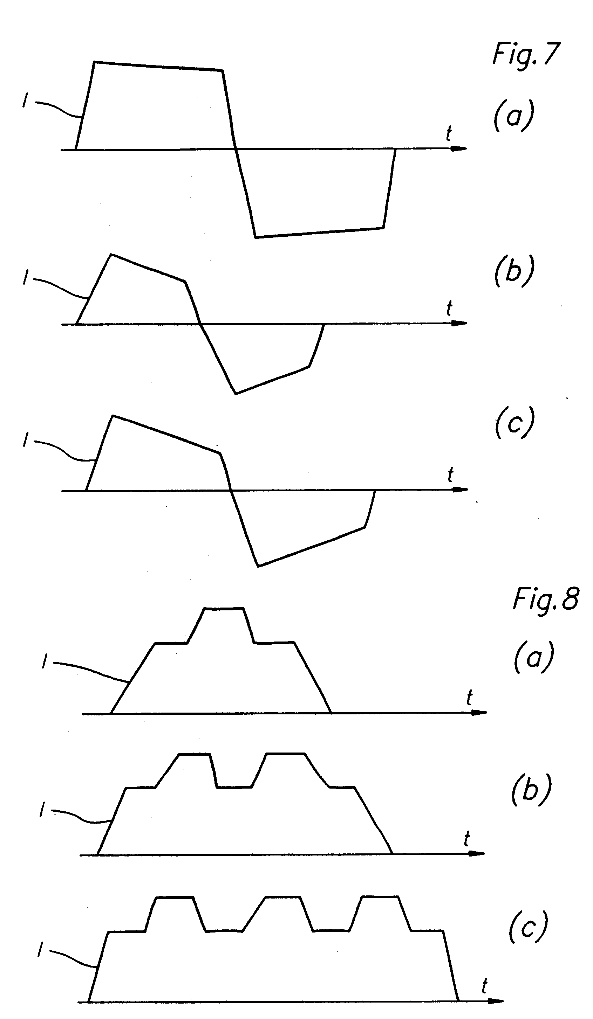

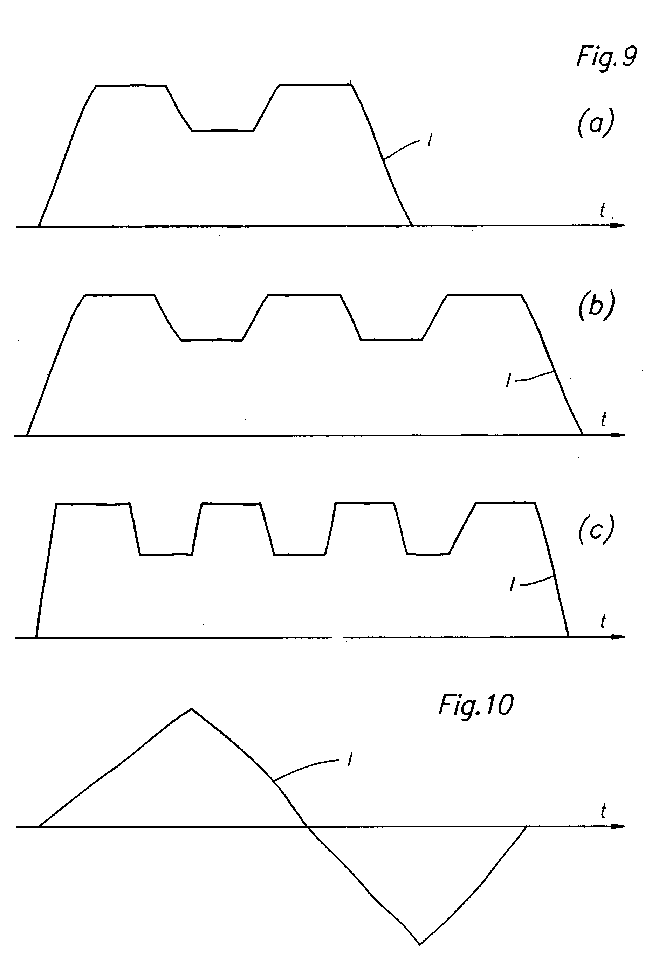

In Fig. 3 ist der Regler 18 ausführlicher dargestellt. Der Regler 18 ist, wie oben bereits erwähnt, als Prozessrechner ausgebildet, von welchem nur die für die Erfindung wesentlichen Teile in Fig. 3 dargestellt sind und im folgenden beschrieben werden. Er enthält einen PID-Regelkreis 50 und einen Schweissstromsollwertgeber 52 in Form eines Speichers, der der Schweissstromform entsprechende Stromsollwerte für jedes Zerhackungsintervall zum Vergleichen mit jedem pro Zerhackungsintervall ermittelten Stromistwert enthält. Für jede Schweissstromform (Sinus, Dreieck, Trapez, usw.) enthält der Speicher 52 eine Sollwerttabelle, die über einen Eingang W_{Tab} auswählbar ist. Ein Ausgang des Speichers 52 ist mit einem Eingang eines Multiplizierers 54 verbunden. Der Ausgang des Multiplizierers 54 ist mit einem Summierpunkt 56 verbunden. Der Summierpunkt 56 verknüpft das aus dem Multiplizierer 54 empfangene Eingangssignal mit dem Stromistwert. Das durch Soll-Istwertvergleich gebildete Ausgangssignal des Summierpunktes 56 verknüpft das aus dem Multiplizierer 54 empfangene Eingangssignal mit dem Stromistwert. Das durch Soll-Istwertvergleich gebildete Ausgangssignal des Summierpunktes 56 wird an den Eingang des PID-Regelkreises 50 angelegt. Der PID-Regelkreis 50 gibt an seinem Ausgang ein Stellsignal an einen Eingang eines Summierpunktes 58 ab. Ein weiterer Ausgang des Speichers 52 ist über eine Feedforward- oder Vorvärtsführungsschleife 60 mit einem weiteren Eingang des Summierpunkts 58 verbunden. Ueber die Feedforwardschleife liefert der Speicher dem Summierpunkt 58 die Aenderung von dem aktuellen Stromsollwert, der an den Multiplizierer 54 abgegeben wird, zu dem nächsten Sollwert, d.h. die erste Ableitung dI/dt oder Steigung der Schweissstromkurve in dem aktuellen Stromsollwert in Richtung zu dem nächsten Stromsollwert. Diese Richtungsinformation wird mit dem Ausgangssignal des PID-Regelkreises 50 verknüpft, so dass das Ausgangssignal des Summierpunkts 58 ein Stellsignal darstellt, mit dem sich der Schweissstrom in der richtigen Richtung und Dosierung einstellen lässt, so dass es bei dem Stromregelvorgang zu keinem Ueberschwingen kommt. Innerhalb der jeder Schweissstromform zugeordneten Sollwerttabelle ist speziell für jede Schweissfrequenz fₛ noch eine Untertabelle auswählbar. Was weiter unten noch näher beschrieben ist. Die Sollwerte der mittels des Eingangssignals W_{Tab} gewählten Stromkurve sowie deren erste Ableitung sind in jeder Sollwerttabelle gespeichert. Für jedes Mass und Zerhackungsintervall werden die entsprechenden Sollwerte aus der Tabelle mit dem Wert der gewünschten Stromamplitude in dem Multiplizierer 54 multipliziert und dann als Sollwert dem Summierpunkt 56 zugeführt. Die gewünschte Stromamplitude wird als Signal I_{Soll} über den A/D-Wandler 25 in den Multiplizerer 54 eingegeben und dort mit dem Stromsollwert aus dem Speicher 52 multipliziert. Die gewünschte Stromamplitude I_{Soll} kann alternativ oder zusätzlich über den Eingang Manuell oder von der Schweissmaschinensteuerung 19 (Fig. 1) aus noch beeinflusst werden, beispielsweise um innerhalb eines Schweisspunktes, also innerhalb einer Halbwelle der Primärwechselspannung, dem Schweissstrom I einen bestimmten Verlauf zu geben, z.B. das Impulsdach mehr und mehr zu neigen, wie es in den Fig. 7a - 7c gezeigt ist, oder mit mehr oder weniger Höckern oder Vertiefungen zu versehen, wie es in den Fig. 8a - 8c bzw. 9a - 9c gezeigt ist.

Der Speicher 52 enthält, wie vorstehend bereits erwähnt, für jede Stromform eine Sollwerttabelle, in dem dargestellten Ausführungsbeispiel vier Sollwerttabellen. In jeder Tabelle ist die gewünschte Schweissstromform durch mehrere im voraus festgelegte Stromsollwerte gespeichert. Gegenwärtig werden pro Periode des Schweissstroms 256 Sollwerte gespeichert. Bei einer Schweissfrequenz von 500 Hz und einer Zerhackungsfrequenz von 10 kHz stehen pro Halbwelle 10 Zerhackungs- oder Schaltintervalle von je 100 us zur Verfügung. Der Schweissstrom kann also pro Halbwelle 10 Mal zerhackt, d.h. zehnmal ein- und ausgeschaltet werden. Von den 256 verfügbaren Schweissstromsollwerten werden daher 20 Schweissstromsollwerte pro Periode ausgewählt, also 10 Sollwerte pro Halbwelle, und für den Soll-Istwertvergleich in dem Regler 18 herangezogen. Wenn die Schweissfrequenz nur 50 Hz betragen würde, könnten pro Periode des Schweissstroms 200 Sollwerte ausgewählt werden, also 100 Sollwerte pro Halbwelle. Entsprechend der gewählten Schweissfrequenz fₛ wird über den A/D-Wandler 27 die zugehörige Untertabelle in der der Schweissstromform zugeordneten Sollwerttabelle ausgewählt. In der Sollwerttabelle sind auch die Aenderungen von einem Schweissstromsollwert zum nächsten, d.h. die dI/dt-Werte innerhalb der Reihe von 256 vorgegebenen Schweissstromsollwerten gespeichert. Wenn mit einer Schweissfrequenz zwischen 35 und 40 Hz gearbeitet würde, kämen alle 256 Punkte bei dem Soll-Istwertvergleich zum Einsatz. Ueblicherweise wird aber mit einer Schweissfrequenz von 500 Hz gearbeitet, so dass nur 20 Punkte pro Periode des Schweissstroms bei dem Soll-Istwertvergleich zum Einsatz kommen. Wenn also statt der Sollwerttabelle mit den 256 Sollwerten eine Untertabelle für eine höhere Schweissfrequenz über fₛ ausgewählt wird, passt der Rechner automatisch die Aenderungen daran an, damit diese der gewählten Abstufung zwischen den Schweissstromsollwerten entsprechen. Eine andere Möglichkeit bestünde darin, von vornherein nicht Sollwerttabellen mit 256 Punkten pro Schweissstromperiode vorzugeben und dann Untertabellen mit weniger Schweissstromsollwerten auszuwählen, sondern diese Untertabellen im voraus zu berechnen und als sollwerttabellen auswählbar im Speicher 52 zusammen mit den Aenderungen von Sollwert zu Sollwert zur Verfügung zu stellen.

Der vom Speicher 52 abgegebene Stromsollwert entspricht genau der gewünschten Schweissstromform, noch nicht aber der gewünschten Amplitude. Diese wird, wie dargelegt, durch einen gesonderten Faktor festgelegt, der über die oben beschriebenen weiteren drei Eingänge in den Multiplizierer 51 eingebbar ist.

Der Regelvorgang geht folgendermassen vor sich: In Anlehnung an das oben zitierte Beispiel wird angenommen, dass mit einer Schweissfrequenz fₛ von 500 Hz und mit einer Zerhackungsfrequenz von 10 kHz gearbeitet werden soll. Der Schweissstrom I habe Sinusform und werde durch Pulsdauermodulation der Primärwechselspannung U auf in Fig. 4 dargestellte Weise erzielt. Für den Schweissstrom I enthält die Sollwerttabelle pro Halbwelle 10 Sollwerte. Die geglättete Gleichspannung, die von dem Gleichstromzwischenkreis 14c abgegeben wird, wird mit 10 kHz so zerhackt, dass sich die den Stromsollwerten entsprechende Schweissstromkurve ergibt. Die Messfrequenz, mit welcher an dem Stromwandler 20 der Istwert des Schweissstroms ermittelt wird, ist gleich der Zerhackungsfrequenz. Zu jedem Schweissstromsollwert wird also ein Schweissstromistwert gemessen. Bei jedem Soll-Istwertvergleich wird festgestellt, ob der gemessene Istwert gleich dem in der Sollwerttabelle vorgegebenen Sollwert des Schweissstroms ist. Wenn das nicht der Fall ist, liefern der Summierpunkt 56 und der PID-Regelkreis 50 ein Fehlersignal, aus dem auf oben beschriebene Weise mittels des Feedforward-Signals ein Stellsignal für das Tastverhältnis gebildet wird. Mit diesem Stellsignal wird auf das Tastverhältnis so eingewirkt, d.h. das Verhältnis zwischen Impulsdauer und Impulspause bei der Pulsdauermodulation der Primärwechselspannung so verändert, dass die Differenz zwischen Schweissstromistwert und Schweissstromsollwert beseitigt wird.

In extrem kurzer Regelzeit lässt sich so innerhalb einer Halbwelle des Schweissstroms, d.h. innerhalb eines Schweisspunktes des Schweissstrom nachregeln. Ein weiterer besonderer Vorteil dieser Regelmethode ist, das zusätzlich jede gewünschte Stromform als Sollwerttabelle abgespeichert und bei Bedarf ausgewählt werden kann. Die Schweissstromform ist in bestimmten Grenzen frei wählbar, die eigentlich nur durch die Maschine gegeben sind (z.B. gibt es eine maximal mögliche Steigung der Schweissstromkurve, die aufgrund der physikalischen Gegebenheiten nicht überschritten werden kann, usw.).

Bei der sogenannten Vollsinusschweissung von Dosenzargen zwischen einer oberen und einer unteren Schweissrolle wie den hier dargestellten Schweisselektroden 10, 12 wird die Aufheizstrecke unter der totalen Kontaktierungslänge zwischen Schweissrollen und Blech in sechs Phasen unterteilt, wobei diese Phasen aus einer Schweissgeschwindigkeit von 60 m/min und 500 Hz Schweissfrequenz sowie einer totalen Kontaktierungslänge von 3 mm resultieren und drei Halbwellen ergeben, welche in drei Kalt- und drei Warmzeiten unterteilt werden (vgl. die Firmen-Zeitung "Soudronic", 1. Jahrgang, Nr. 1, Juni 1985, S. 3). Das Herstellen jedes Schweisspunktes zwischen den Schweissrollen besteht somit aus einer dreimaligen Wechselwirkung zwischen Aufheizen und Kühlen. Die erfindungsgemässe Regelmethode erlaubt das optimale Beherrschen der Aufheiz- und Abkühlphasen innerhalb eines Schweisspunktes. Die Fig. 7 - 9 zeigen dafür geeignete Schweissstromformen. Mit der Erfindung ist so die Adaption an das Schweissverhalten verschiedener Werkstoffe möglich. Bleche, welche bislang nur mit Spritzern schweissbar waren, können nun mit flachen Schweissstromimpulsen ohne Stromspitzen gut geschweisst werden.

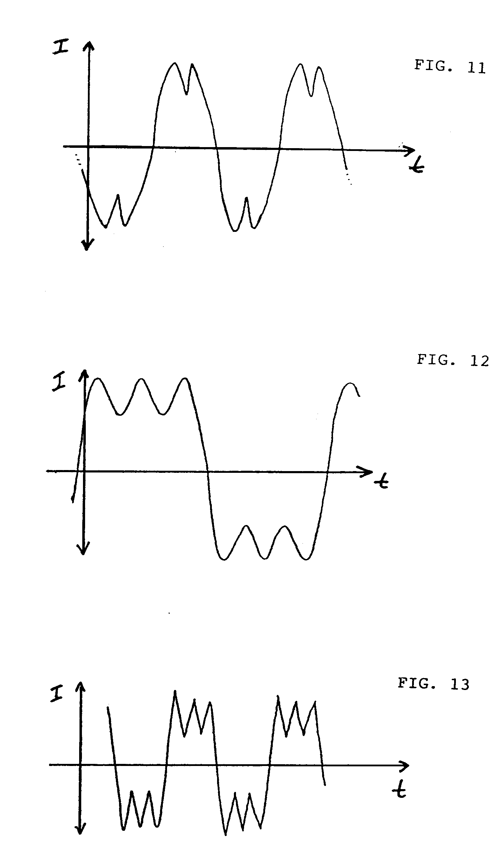

Figur 11 zeigt einen Stromverlauf, bei welchem der Schweissstrom in jeder Halbwelle zunächst sinusförmig ansteigt, vor Erreichen des Sinus-Scheitelpunktes jedoch abfällt und erneut ansteigt, und danach sinusförmig zu Nulldurchgang hin abfällt. Mit dieser Ausführungsform der Erfindung ergibt sidh eine sehe gute, gezielte Beeinflussung der Schweisspunktbildungswärme (keine flüssige Phase). Beim Rollennahtschweissen kann dabei z.B. mit einer Schweissfrequenz von 500 Hz, einem Schweissstrom von 3700 A und einer Schweissgeschwindigkeit von 60 m/min auch bei sonst schwierig zu beherrschenden Blechqualitäten mit sehr guten Resultaten gearbeitet werden.

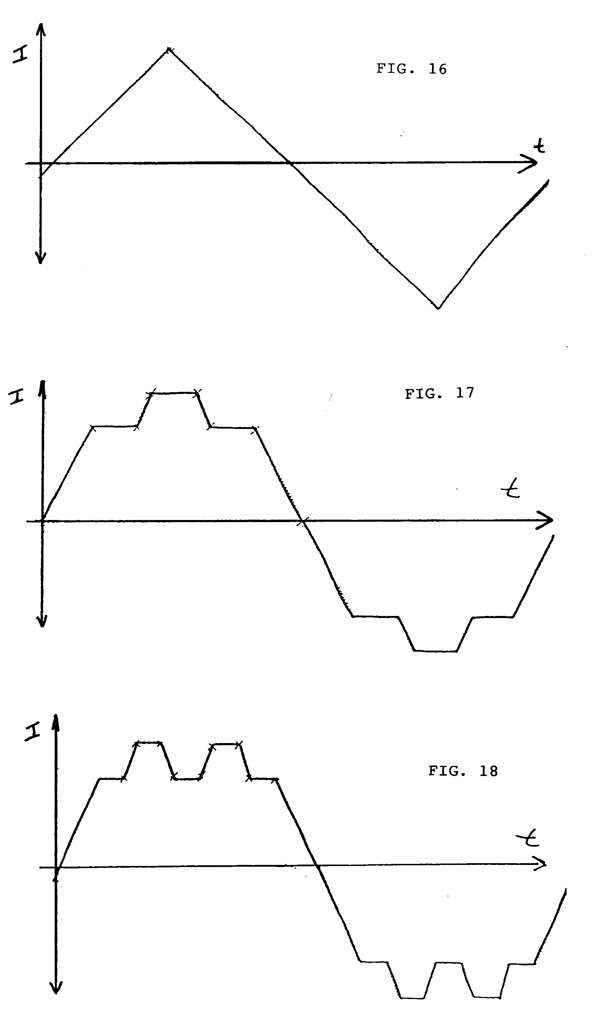

Figuren 12 und 13 zeigen weitere bevorzugte Stromformen mit zweimaligem Abfall des Schweissstroms in der Mitte der Halbwelle. Figur 15 mit zunächst sinusförmigem Anstieg ab dem Nulldurchgang. Figur 13 mit linearem Anstieg und mit einer ersten Amplitudenspitze, die höher liegt als die beiden noch folgenden Spitzen. Mit diesen Stromformen können höchste Schweissgeschwindigkeiten mit kleiner Schweissfrequenz erreicht werden, was übermässige Erwärmung der Schweissanlage verhindert und geringe Energieverluste ergibt. Beispielhaft können für das Rollennahtschweissen genannt werden: Frequenz 250 Hz, Strom 3780 A, Geschwindigkeit 60 m/min.

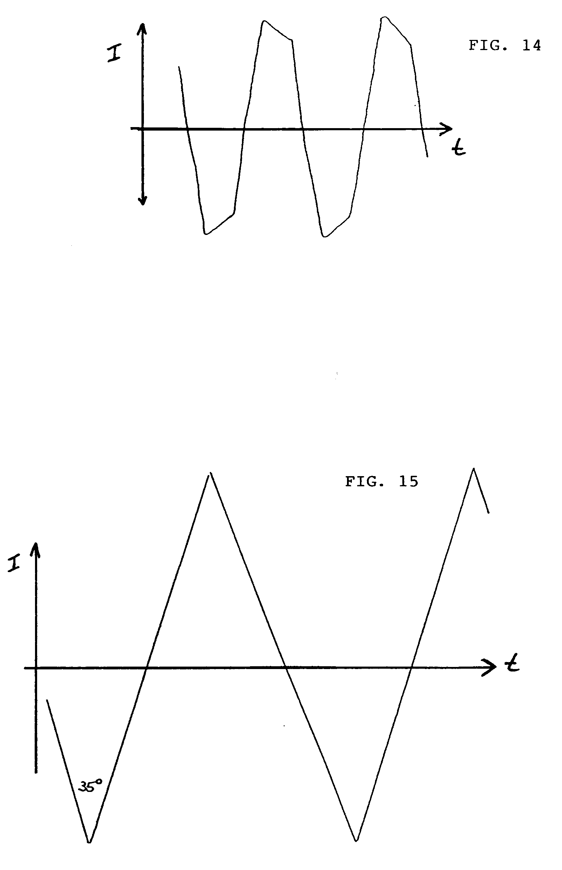

Figur 14 zeigt eine bevorzugte Stromform mit jeweils einem flach abfallenden Stromverlauf in der Mitte jeder Halbwelle. Mit diesem Verlauf kann je nach Blechqualität ein grösserer Schweissbereich (zwischen Kleber und Spritzergrenze) erreicht werden.

Figur 15 zeigt einen dreieckförmigen Verlauf des Stromes. Hierbei sind Vorteile insbesondere beim Schweissen von unkonventionell beschichteten (nicht verzinnten) Blechen zu erzielen.

Figur 16 zeigt eine ähnliche Stromform mit langsamerer Energie-Einbringung in das zu schweissende Material.

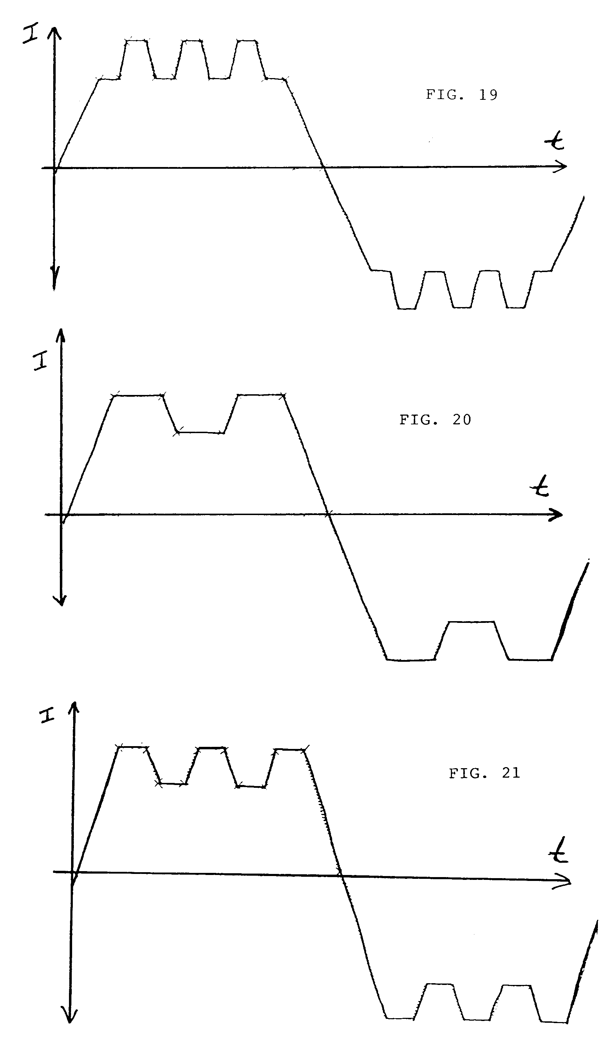

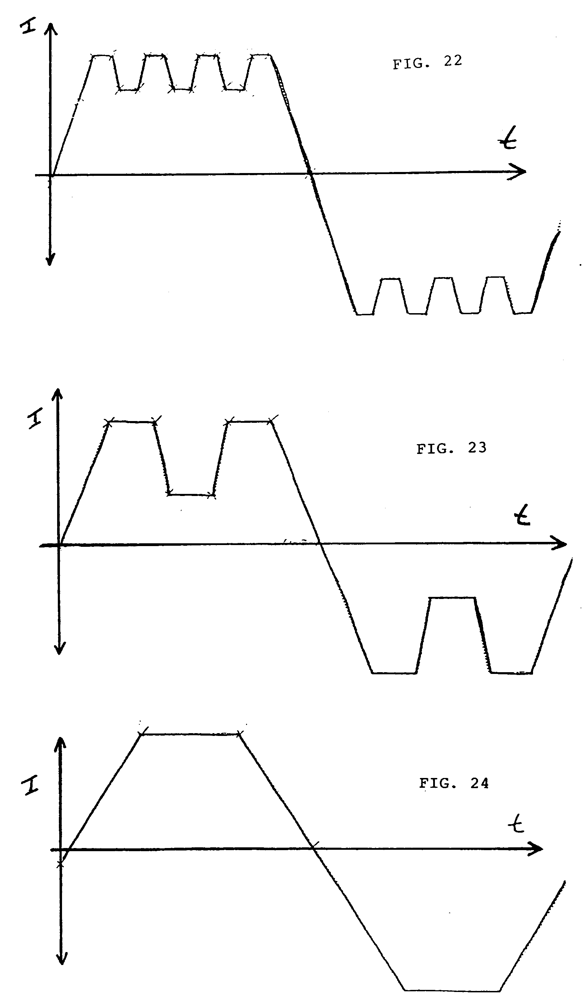

Figuren 17 bis 25 zeigen Stromformen, bei welchen der Schweissstrom jeweils während gewissen Zeiten innerhalb der Halbwelle konstant gehalten wird. Dies ergibt bei speziellen Schweissungen eine besonders gute Energie-Einbringung in die Schweisszone.

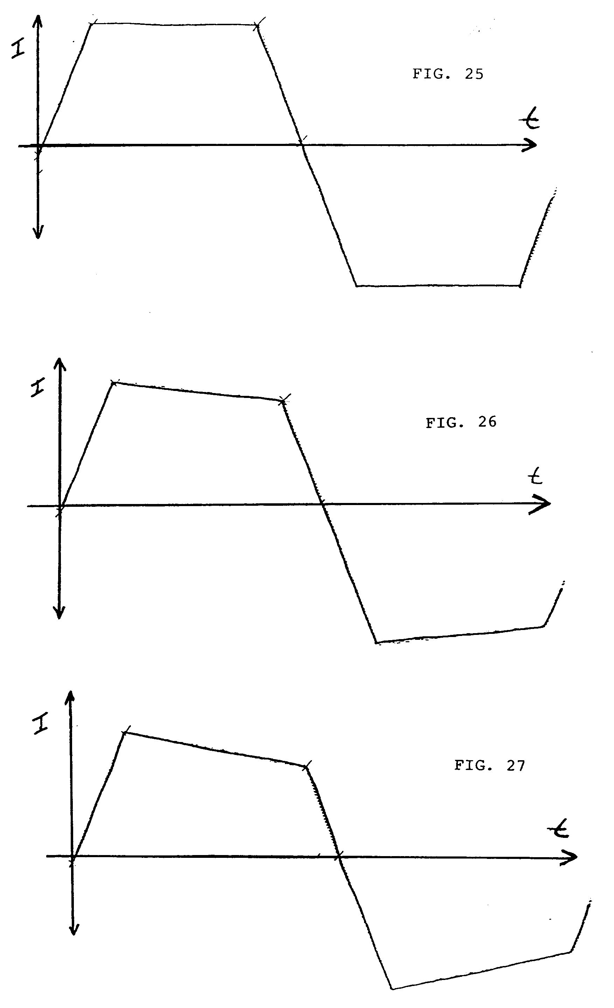

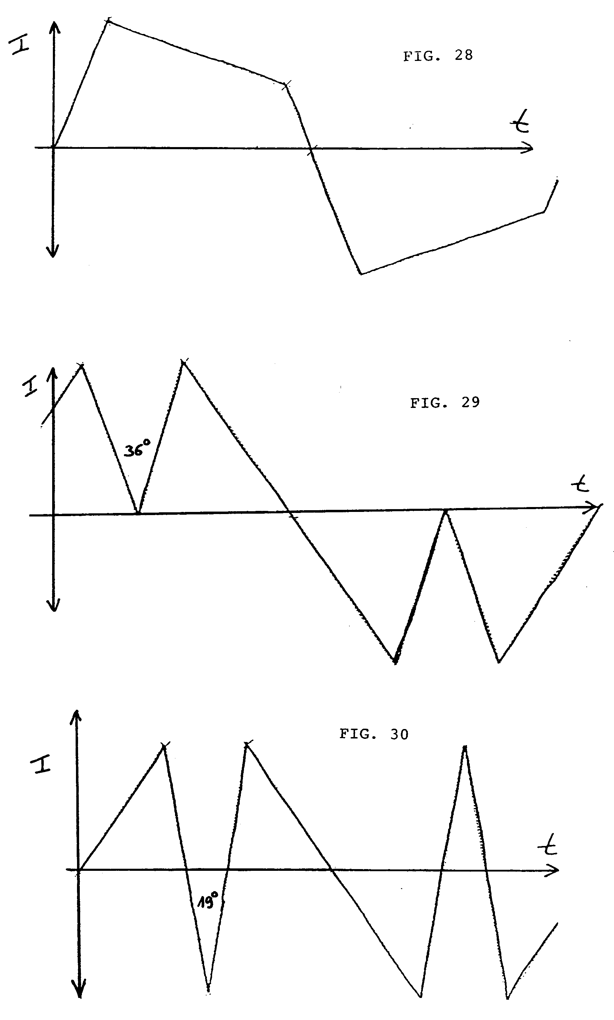

Figuren 26, 27 und 28 zeigen einen mehr oder weniger flach abfallenden Verlauf des Schweissstroms während der Halbwelle.

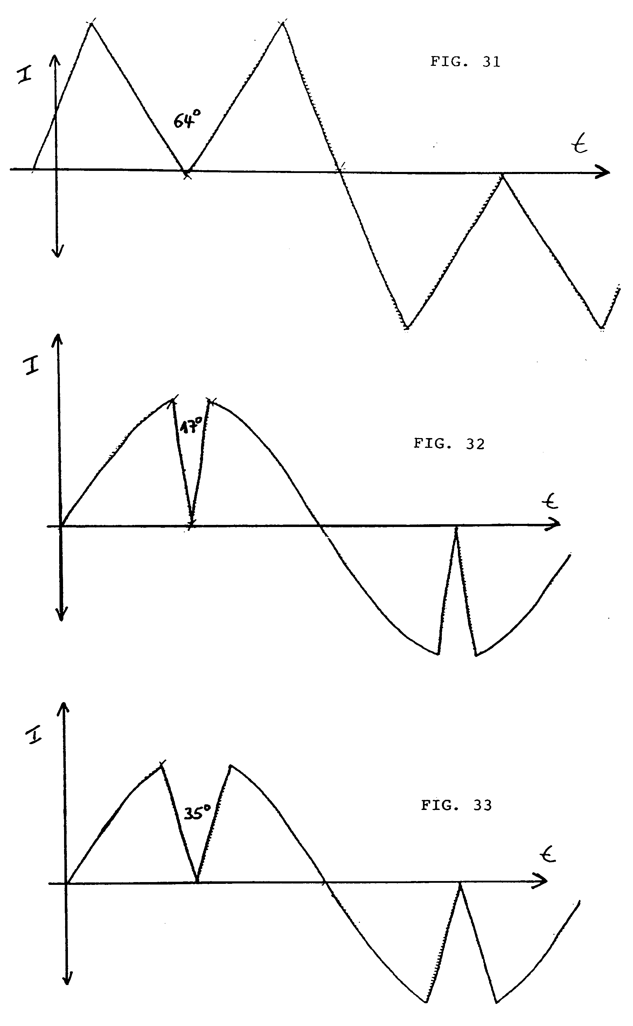

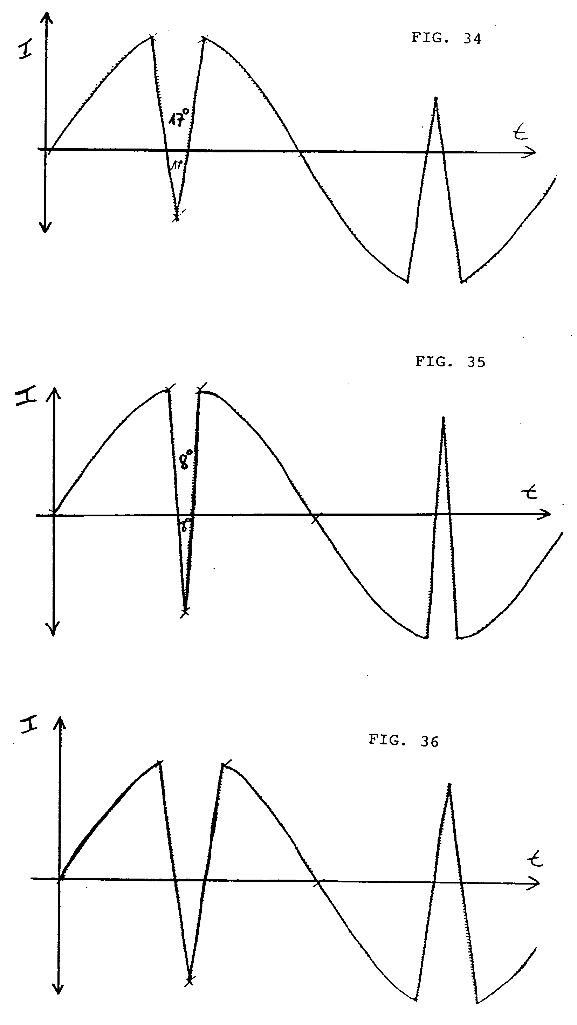

Figuren 29 bis 36 zeigen Stromformen, bei welchen die Energie-Einbringung während der Halbwelle stark reduziert wird, indem der Strom bis zum Nullwert reduziert wird, oder bei welchen der Strom während der Halbwelle jeweils für kurze Zeit umgekehrt wird.

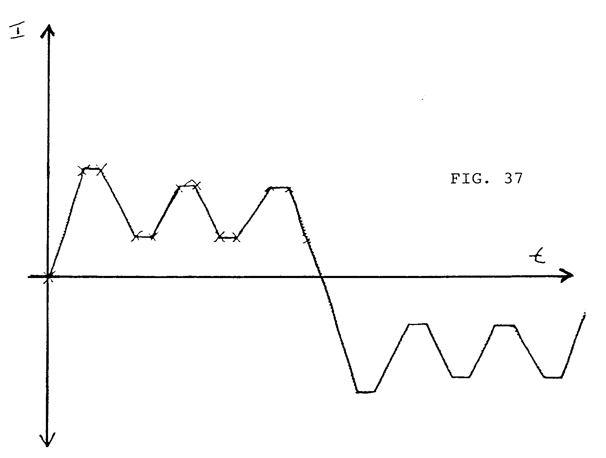

Figur 37 zeigt eine Stromform mit konstanten Anteilen, wobei der erste konstante Abschnitt eine höhere Amplitude aufweist als die folgenden Abschnitte.

## Patentansprüche

1. Verfahren zum Widerstandsschweissen mit in periodischen Halbwellen pulsierendem, insbesondere wechselndem Schweissstrom, der aus einer Primärwechselspannung (Uₚ) eines Schweisstransformators (16) erzeugt und durch Pulsdauermodulation derselben geregelt wird, wobei die Primärwechselspannung bei der Pulsdauermodulation in jeder Halbwelle mit einer Zerhackungsfrequenz zerhackt wird und der Schweissstrom innerhalb der Halbwelle aufgrund eines Soll-Istwertvergleichs geregelt wird, indem entsprechend auf das Tastverhältnis bei der Pulsdauermodulation eingewirkt wird, wobei die Zerhackungsfrequenz das n-fache der Schweissstromfrequenz beträgt, wobei n eine Zahl grösser als 1 ist, wobei eine Reihe von Schweissstromsollwerten für jede Halbwelle vorgesehen ist, wobei in jeder Halbwelle n Soll-Istwertvergleiche des Schweissstroms durchgeführt werden, und wobei in jeder Halbwelle n-mal auf das Tastverhältnis eingewirkt wird.

2. Verfahren nach Anspruch 1, dadurch gekennzeichnet, dass die Schweissstromform mittels einer Sollwerttabelle vorwählbar ist.

3. Verfahren nach einem der Ansprüche 1 oder 2, dadurch gekennzeichnet, dass die Schweissstromform von der Sinusform abweicht.

4. Verfahren nach Anspruch 3, dadurch gekennzeichnet, dass der Schweissstrom nach dem Nulldurchgang zunächst im wesentlichen sinusförmig ansteigt, vor Erreichen des Sinusscheitelwertes abfällt und erneut ansteigt, und danach im wesentlichen sinusförmig zum Nulldurchgang hin abfällt.

5. Verfahren nach Anspruch 4, dadurch gekennzeichnet, dass der Abfall des Stromes innerhalb der Halbwelle bis zum Nullwert erfolgt.

6. Verfahren nach Anspruch 4, dadurch gekennzeichnet, dass der Abfall des Stromes innerhalb der Halbwelle unter den Nullwert des Stromes erfolgt.

7. Verfahren nach Anspruch 3, dadurch gekennzeichnet, dass der Schweissstrom nach dem Nulldurchgang zunächst im wesentlichen sinusförmig ansteigt, danach mehrmals jeweils abfallenden und anschliessend ansteigenden Verlauf nimmt, und danach im wesentlichen sinusförmig zum Nulldurchgang hin abfällt.

8. Verfahren nach Anspruch 7, dadurch gekennzeichnet, dass der Schweissstrom zwischen den im wesentlichen sinusförmigen Abschnitten zweimal abfallend und ansteigend verläuft.

9. Verfahren nach Anspruch 3, dadurch gekennzeichnet, dass der Schweissstrom zunächst steil ansteigend danach flach abfallend und anschliessend steil abfallend verläuft.

10. Verfahren nach Anspruch 3, dadurch gekennzeichnet, dass der Schweissstrom im wesentlichen linear vom Nulldurchgang her ansteigt, im Bereich des Scheitelwertes der Halbwelle mehrmals abfällt und wieder ansteigt, und danach zum Nulldurchgang hin im wesentlichen linear abfällt.

11. Verfahren nach Anspruch 10, dadurch gekennzeichnet, dass der Schweissstrom zwischen den im wesentlichen linearen Anschnitten zweimal abfallend und ansteigend verläuft.

12. Verfahren nach Anspruch 3, dadurch gekennzeichnet, dass der Schweissstrom dreiecksförmig verläuft.

13. Verfahren nach Anspruch 3, dadurch gekennzeichnet, dass der Schweissstrom trapezförmig verläuft.

14. Verfahren nach Anspruch 13, dadurch gekennzeichnet, dass innerhalb des im wesentlichen horizontal verlaufenden Trapezabschnittes ein weiterer trapezförmiger Verlauf erfolgt.

15. Verfahren nach Anspruch 14, dadurch gekennzeichnet, dass innerhalb des im wesentlichen horizontal verlaufenden Trapezabschnittes mehrere ebenfalls trapezförmige Stromänderungen erfolgen.

16. Verfahren nach Anspruch 15, dadurch gekennzeichnet, dass der horizontale Abschnitt des ersten Trapezes höher liegt als die folgenden horizontalen Abschnitte.

17. Verfahren nach Anspruch 3, dadurch gekennzeichnet, dass der Schweissstrom zunächst im wesentlichen linear ansteigt, danach im wesentlichen linear abfällt und nachfolgend ansteigt, und danach erneut im wesentlichen linear abfällt.

18. Verfahren nach Anspruch 17, dadurch gekennzeichnet, dass der Abfall des Stromes innerhalb der Halbwelle im wesentlichen auf den Nullwert des Stromes erfolgt.

19. Verfahren nach Anspruch 17, dadurch gekennzeichnet, dass der Abfall des Stromes innerhalb der Halbwelle unter den Nullwert des Stromes erfolgt.

20. Verfahren nach einem der Ansprüche 3 bis 16, dadurch gekennzeichnet, dass die Schweissfrequenz 500 Hz oder 250 Hz beträgt.

21. Anwendung des Verfahrens nach einem der Ansprüche 16 bis 33 beim Rollennahtschweissen von Gebinden.

22. Anwendung des Verfahrens nach einem der Ansprüche 16 bis 33 beim Platinenschweissen.

23. Anordnung zur Durchführung des Verfahrens nach einem der Ansprüche 1 bis 22, mit einem statischen Frequenzumformer (14), der einen Gleichstromzwischenkreis (14c) und als Ausgangsstufe einen Zerhacker (14b) aufweist, der die Primärwechselspannung (Uₚ) erzeugt und an einen Schweisstransformator (16) abgibt, dessen Sekundärkreis mit Schweisselektroden (10, 12) einer Widerstandsschweissmaschine verbindbar ist, und mit einer Steuereinrichtung, durch welche der Zerhacker zur mehrfachen Zerhackung jeder Halbwelle der Primärwechselspannung ansteuerbar ist, wobei die Steuereinrichtung einen Regler (18), der mit dem Zerhacker (14b) des Frequenzumformers (14) zum Regeln des Schweissstroms (I) durch Pulsdauermodulation der Primärwechselspannung verbunden ist, und einen Schweissstromsollwertgeber aufweist, und wobei der Schweissstromsollwertgeber des Reglers (18) ein Speicher (52) ist, dadurch gekennzeichnet, dass in dem Speicher (52) eine der der Schweissstromform entsprechende Reihe von Stromsollwerte für jedes Zerhackungsintervall zum Vergleichen mit jedem pro Zerhackungsintervall ermittelten Stromistwert gespeichert sind und dass der Vergleicher zum Vergleichen von Stromsollwerten und Stromistwerten mit der Zerhackungsfrequenz ausgestaltet ist.

24. Anordnung nach Anspruch 23, dadurch gekennzeichnet, dass der Zerhacker (14b) des Frequenzumformers (14) eine Brückenschaltung mit Transistoren (T₁-T₄) als Schaltelementen und zu diesen parallelen Freilaufdioden (F₁-F₄) enthält.

25. Anordnung nach Anspruch 23 oder 24, dadurch gekennzeichnet, dass in dem Speicher (52) mehrere Reihen von Stromsollwerten speicherbar sind, und dass der Speicher (52) einen Wahleingang (W_{tab}) aufweist, mittels welchem eine der gespeicherten Reihen auswählbar ist.

26. Anordnung nach Anspruch 25, dadurch gekennzeichnet, dass der Speicher (52) einen Schweissfrequenzeingang (fₛ) aufweist, und dass für jede Schweissfrequenz in dem Speicher (52) eine der gewünschten Schweissstromform entsprechende Reihe von Stromsollwerten speicherbar ist.

27. Anordnung nach einem der Ansprüche 25 oder 26, wobei der Regler (18) einen mit Feedforwardschleife (60) versehenen PID-Regelkreis (50) enthält, dadurch gekennzeichnet, dass zu jedem Stromsollwert im Speicher die Aenderung zum folgenden Stromsollwert gespeichert ist und als Feedforwardgrösse dem Ausgang des PID-Regelkreises (50) aufgeschaltet wird.

28. Anordnung nach einem der Ansprüche 23 bis 27, dadurch gekennzeichnet, dass dem Speicher (52) ein Multiplizierer (54) nachgeschaltet ist, der den Tabellensollwert mit einem wählbaren Faktor multipliziert, welcher über einen einstellbaren Stromsollwert-Eingang (I_{Soll}) des Reglers (18) eingebbar ist.

29. Anordnung nach Anspruch 28, dadurch gekennzeichnet, dass der Multiplizierer (54) weitere Eingänge hat, über die weitere Faktoren manuell oder aus einer übergeordneten Schweissmaschinensteuerung (19) eingebbar sind.

30. Widerstandsschweissmaschine mit einer Anordnung nach einem der Ansprüche 23 bis 29.

## Claims

1. A process for resistance welding with a welding current which pulsates in periodic half-waves, particularly an alternating current, and which is generated from a primary alternating voltage (Uₚ) of a welding transformer (16) and is controlled by pulse length modulation thereof, wherein the primary alternating voltage during the pulse length modulation is chopped in each half-wave with a chopping frequency and the welding current is controlled within the half-wave based on a nominal-actual value comparison in that the pulse duty factor is correspondingly influenced during the pulse length modulation, wherein the chopping frequency is n times the welding current frequency, wherein n is a number greater than 1, wherein a series of welding current nominal values is provided for each half-wave, wherein n nominal-actual value comparisons are made of the welding current in each half-wave, and wherein the pulse duty factor is influenced n times in each half-wave.

2. A process according to claim 1, characterised in that the form of the welding current can be preselected by means of a nominal value table.

3. A process according to either one of claims 1 or 2, characterised in that the form of the welding current deviates from the sinusoidal form.

4. A process according to claim 3, characterised in that after the zero crossing the welding current first increases substantially sinusoidally, decreases and increases again before the sine peak value is reached, and thereafter falls substantially sinusoidally towards the zero crossing.

5. A process according to claim 4, characterised in that the decrease in the current within the half-wave occurs down to the zero value.

6. A process according to claim 4, characterised in that the decrease in the current within the half-wave occurs below the zero value of the current.

7. A process according to claim 3, characterised in that after the zero crossing the welding current first increases substantially sinusoidally, and thereafter repeatedly adopts a decreasing and then increasing course, and thereafter decreases substantially sinusoidally towards the zero crossing.

8. A process according to claim 7, characterised in that the welding current follows a course which decreases and increases twice between the substantially sinusoidal sections.

9. A process according to claim 3, characterised in that the course of the welding current at first increases steeply, thereafter decreases gently and then decreases steeply.

10. A process according to claim 3, characterised in that the welding current increases substantially linearly from the zero crossing, repeatedly decreases and increases again in the region of the peak value of the half-wave, and thereafter decreases substantially linearly towards the zero crossing.

11. A process according to claim 10, characterised in that the course of the welding current decreases and increases twice between the substantially linear sections.

12. A process according to claim 3, characterised in that the welding current follows a triangular course.

13. A process according to claim 3, characterised in that the welding current follows a trapezoidal course.

14. A process according to claim 13, characterised in that a further trapezoidal course occurs within the substantially horizontally progressing trapezoidal section.

15. A process according to claim 14, characterised in that a plurality of current variations, which are likewise trapezoidal, occurs within the substantially horizontally progressing trapezoidal section.

16. A process according to claim 15, characterised in that the horizontal section of the first trapezium is higher than the following horizontal sections.

17. A process according to claim 3, characterised in that the welding current first increases substantially linearly, thereafter decreases substantially linearly and subsequently increases, and thereafter decreases substantially linearly again.

18. A process according to claim 17, characterised in that the decrease in current within the half-wave occurs substantially down to the zero value of the current.

19. A process according to claim 17, characterised in that the decrease in the current within the half-wave occurs below the zero value of the current.

20. A process according to any one of claims 3 to 16, characterised in that the welding frequency is 500 Hz or 250 Hz.

21. Use of the process according to any one of claims 16 to 33 in the roller seam welding of containers.

22. Use of the process according to one of claims 16 to 33 in sheet-metal blank welding.

23. An arrangement for carrying out the process according to any one of claims 1 to 22, having a static frequency converter (14), which has a direct current intermediate circuit (14c) and, as an output stage, has a chopper (14b) which generates the primary alternating voltage (Uₚ) and transmits it to a welding transformer (16), the secondary circuit of which can be connected to welding electrodes (10 and 12) of a resistance welding machine, and having a control device by means of which the chopper can be actuated for the multiple chopping of each half-wave of the primary alternating voltage, wherein the control device has a regulator (18), which is connected to the chopper (14b) of the frequency converter (14) for regulating the welding current (I) by pulse length modulation of the primary alternating voltage, and which has a welding current reference element, and wherein the welding current reference element of the regulator (18) is a memory (52), characterised in that a series of current nominal values corresponding to the form of the welding current for each chopping interval is stored in the memory (52) for comparison with each current actual value which is determined per chopping interval, and that the comparator is designed for the comparison of current nominal values and current actual values with the chopping frequency.

24. An arrangement according to claim 23, characterised in that the chopper (14b) of the frequency converter (14) contains a bridge circuit with transistors (T₁-T₄) as circuit elements and free-wheel diodes (F₁-F₄) in parallel with the latter.

25. An arrangement according to claim 23 or 24, characterised in that a plurality of series of nominal currents can be stored in the memory (52), and that the memory (52) has a selector input (W_{tab}) by means of which one of the stored series can be selected.

26. An arrangement according to claim 25, characterised in that the memory (52) has a welding frequency input (fₛ), and that a series of current nominal values corresponding to the desired form of welding current can be stored in the memory (52) for each welding frequency.

27. An arrangement according to either one of claims 25 or 26, wherein the regulator (18) contains a PID regulating circuit (50), which is provided with a feed forward loop (60), characterised in that for each current nominal value in the memory, the change to the following current nominal value is stored and is supplied to the output of the PID regulating circuit (50) as a feed-forward quantity.

28. An arrangement according to any one of claims 23 to 27, characterised in that a multiplier (54) is connected downstream of the memory (52) and multiplies the table nominal value by a selectable factor which can be input via an adjustable current nominal value input (I_{Nom}) of the regulator (18).

29. An arrangement according to claim 28, characterised in that the multiplier (54) has further inputs, via which further factors can be input manually or from a superordinate welding machine control system (19).

30. A resistance welding machine with an arrangement according to any one of claims 23 to 29.

## Revendications

1. Procédé de soudage par résistance utilisant un courant de soudage pulsatoire pendant des alternances périodiques, notamment alternatif, à alternances périodiques et qui est produit à partir d'une tension alternative primaire (Uₚ) d'un transformateur de soudage (16) et est réglé au moyen d'une modulation d'impulsions en durée, la tension alternative primaire étant hachée pendant chaque alternance avec une fréquence de hachage lors de la modulation d'impulsions en durée, et le courant de soudage étant réglé au cours de l'alternance sur la base d'une comparaison valeur de consigne - valeur réelle, par le fait que le taux d'impulsions est influencé de façon correspondante lors de la modulation d'impulsions en durée, selon lequel la fréquence de hachage est égale à n fois la fréquence du courant de soudage, n étant un nombre supérieur à 1, une série de valeurs de consigne du courant de soudage sont prévues pour chaque alternance, n comparaisons valeur de consigne - valeur réelle du courant de soudage sont exécutées pendant chaque alternance, et, le taux d'impulsions est influencé n fois pendant chaque alternance.

2. Procédé selon la revendication 1, caractérisé en ce que la forme du courant de soudage peut être présélectionnée au moyen d'un tableau de valeurs de consigne.

3. Procédé selon l'une des revendications 1 ou 2, caractérisé en ce que la forme du courant de soudage diffère de la forme sinusoïdale.

4. Procédé selon la revendication 3, caractérisé en ce qu'après le passage par zéro, le courant de soudage augmente tout d'abord essentiellement avec une forme sinusoïdale, retombe avant que soit atteinte chaque valeur maximale du sinus et augmente à nouveau, puis retombe essentiellement avec une forme sinusoïdale jusqu'au passage par zéro.

5. Procédé selon la revendication 4, caractérisé en ce que la diminution du courant à l'intérieur de l'alternance s'effectue jusqu'à la valeur zéro.

6. Procédé selon la revendication 4, caractérisé en ce que la diminution du courant pendant l'alternance s'effectue jusqu'au-dessous de la valeur nulle du courant.

7. Procédé selon la revendication 3, caractérisé en ce qu'après le passage par zéro, le courant de soudage augmente tout d'abord avec une forme essentiellement sinusoïdale, puis prend à plusieurs reprises une allure qui respectivement descend, puis remonte, et ensuite retombe essentiellement avec une forme sinusoïdale jusqu'au passage par zéro.

8. Procédé selon la revendication 7, caractérisé en ce que le courant de soudage varie en descendant et en remontant deux fois entre les sections de forme essentiellement sinusoïdale.

9. Procédé selon la revendication 3, caractérisé en ce que le courant de soudage varie en montant tout d'abord fortement, puis en retombant lentement et ensuite en diminuant fortement.

10. Procédé selon la revendication 3, caractérisé en ce que le courant de soudage augmente essentiellement linéairement à partir du passage par zéro, diminue et augmente à nouveau à plusieurs reprises au voisinage de la valeur maximale de l'alternance, et retombe ensuite essentiellement linéairement jusqu'au passage par zéro.

11. Procédé selon la revendication 10, caractérisé en ce que le courant de soudage diminue et remonte à deux reprises entre les sections essentiellement linéaires.

12. Procédé selon la revendication 3, caractérisé en ce que le courant de soudage varie avec une forme triangulaire.

13. Procédé selon la revendication 3, caractérisé en ce que le courant de soudage varie avec une forme trapézoïdale.

14. Procédé selon la revendication 13, caractérisé en ce qu'à l'intérieur de la section trapézoïdale qui s'étend essentiellement horizontalement intervient une autre variation de forme trapézoïdale.

15. Procédé selon la revendication 14, caractérisé en ce que pendant la section trapézoïdale qui s'étend sensiblement horizontalement, il se produit plusieurs modifications également de forme trapézoïdale du courant.

16. Procédé selon la revendication 15, caractérisé en ce que la section horizontale du premier trapèze est plus élevée que les sections horizontales suivantes.

17. Procédé selon la revendication 3, caractérisé en ce que le courant de soudage augmente tout d'abord essentiellement linéairement, retombe ensuite essentiellement linéairement, puis remonte, et ensuite diminue à nouveau essentiellement linéairement.

18. Procédé selon la revendication 17, caractérisé en ce que la diminution de courant pendant l'alternance s'effectue essentiellement jusqu'à la valeur zéro du courant.

19. Procédé selon la revendication 17, caractérisé en ce que la diminution du courant à l'intérieur de l'alternance s'effectue jusqu'au-dessous de la valeur zéro du courant.

20. Procédé selon l'une des revendications 3 à 7, caractérisé en ce que la fréquence de soudage est égale à 500 Hz ou 250 Hz.

21. Application du procédé selon l'une des revendications 16 à 20 lors du soudage à la molette d'emballages en fûts.

22. Procédé selon l'une des revendications 16 à 20 lors du soudage à platines.

23. Dispositif pour la mise en oeuvre du procédé selon l'une des revendications 1 à 22, comportant un convertisseur de fréquence statique (14), qui comprend un circuit à courant continu (14c) et, en tant qu'étage de sortie, un hacheur (14b), qui produit la tension alternative primaire (Uₚ) et l'envoie à un transformateur de soudage (16), dont le circuit secondaire peut être relié à des électrodes de soudage (10,12) d'une machine de soudage par résistance, et un dispositif de commande, grâce auquel le hacheur peut être commandé pour hacher de façon multiple chaque alternance de la tension alternative primaire, et dans lequel le dispositif de commande comporte un régulateur (18), qui est relié au hacheur (14b) du convertisseur de fréquence (14) pour régler le courant de soudage (I) par modulation d'impulsions en durée de la tension alternative primaire, et un générateur de valeurs de consigne du courant de soudage, et dans lequel le générateur de valeurs de consigne du courant de soudage du régulateur (18) est une mémoire (52), caractérisé en ce qu'une série, qui correspond à la forme du courant de soudage, de valeurs de consigne du courant pour chaque intervalle de hachage sont mémorisées dans la mémoire (52) pour être comparées à une valeur réelle du courant déterminée lors de chaque intervalle de hachage, et que le comparateur est agencé de manière à comparer des valeurs de consigne du courant et des valeurs réelles du courant à la fréquence de hachage.

24. Dispositif selon la revendication 23, caractérisé en ce que le hacheur (14b) du convertisseur de fréquence (14) contient un circuit en pont comportant des transistors (T₁-T₄) en tant qu'éléments de commutation et des diodes de fonctionnement en roue libre (F₁-F₄) parallèles à ces éléments.

25. Dispositif selon la revendication 23 ou 24, caractérisé en ce que plusieurs séries de valeurs de consigne de courant peuvent être mémorisées dans la mémoire (52) et que la mémoire (52) possède une entrée de sélection (W_{tab}), à l'aide de laquelle l'une des séries mémorisées peut être sélectionnée.

26. Dispositif selon la revendication 25, caractérisé en ce que la mémoire (52) possède une entrée de fréquence de soudage (fₛ), et qu'une série de valeurs de consigne du courant, qui correspond à la forme désirée du courant de soudage, peuvent être mémorisées dans la mémoire (52) pour chaque fréquence de soudage.

27. Dispositif selon l'une des revendications 25 à 26, dans lequel le régulateur (18) contient un circuit de régulation PID (à action proportionnelle, intégrale et différentielle) (50) pourvu d'une boucle de transmission directe (60), caractérisé en ce que pour chaque valeur de consigne de courant, la modification par rapport à la valeur de consigne de courant suivante est mémorisée dans la mémoire et est appliquée, en tant que grandeur transmise directement, à la sortie du circuit de régulation PID (50).

28. Dispositif selon l'une des revendications 23 à 27, caractérisé en ce qu'en aval de la mémoire (52) est branché un multiplicateur (54), qui multiplie la valeur de consigne du tableau par un facteur pouvant être choisi, qui peut être introduit par l'intermédiaire d'une entrée réglable (I_{consigne}) de la valeur de consigne du courant du régulateur (18).

29. Dispositif selon la revendication 28, caractérisé en ce que le multiplicateur (54) comporte d'autres entrées, au moyen desquelles d'autres facteurs peuvent être introduits manuellement ou par l'intermédiaire d'une unité de commande de rang supérieur (19) de la machine de soudage.

30. Machine de soudage par résistance comportant un dispositif selon l'une des revendications 23 à 29.
